# EUROPEAN PATENT SPECIFICATION

(11) **EP 1 535 762 B1**
(45) Date of publication and mention of the grant of the patent: **10.12.2008**
(21) Application number: 03792658.1
(22) Date of filing: 07.08.2003
(51) Int. Cl.: B60C 15/06, B60C 1/00, B60C 17/00, C08L 9/00, C08L 61/06

(54) **TIRE**
REIFEN
PNEU

(30) Priority: 20.08.2002 JP 2002239702
(43) Date of publication of application: 01.06.2005
(73) Proprietor: Bridgestone Corporation, Tokyo 104-8340 (JP)
(72) Inventor: NISHIZAKI, Tomoyasu, Bridgestone Corp. T. C., Kodaira-shi, Tokyo 187-8531 (JP); KUSANO, Tomohiro, Bridgestone Corp. T. C., Kodaira-shi, Tokyo 187-8531 (JP)
(74) Representative: Whalley, Kevin
(86) International application number: PCT/JP2003/010072
(87) International publication number: WO 2004/018238

(56) References cited:
- WO-A1-98/54010
- JP-A- 3 028 243
- JP-A- 2002 079 803
- JP-A- 2002 105 249
- US-A1- 2001 018 943

## Description

### BACKGROUND OF THE INVENTION

The present invention relates to a tire on which influence is not exerted by a puncture caused by an external injury, specifically to a tire which is excellent in a durability (run flat durability) in running after the tire is injured and a vibration riding comfort (riding comfort) in usual running.

### RELATED ART

In a tire, a side-reinforcing layer by a rubber composition or a combined material of a rubber composition with a fiber has so far been provided in order to elevate a rigidity of a side wall part. In the case of running when an internal pressure of a tire is reduced by a puncture, a so-called run flat running state, a side-reinforcing layer is increased in deformation in proportion with an increase in deformation of a side wall part in a tire, and heating goes on and reaches to 200°C or higher in a certain case. In such state, the side-reinforcing layer exceeds a fracture limit and leads to failure of the tire.

JP-A- 2002-79803 discloses a tire showing the features of the preamble of independent claims 1, 2 and 3.

A means for extending time which passes until failure is caused includes an increase in a volume of rubber such as an increase in the maximum thicknesses of a side-reinforcing layer and a bead filler which are provided. Assuming of such means results in bringing about an undesirable situation such as a deterioration in a riding comfort, an increase in a weight and an increase in a noise level.

If a side-reinforcing layer and a bead filler which are provided are decreased in a volume in order to avoid the situation described above, for example, a deterioration in a riding comfort, a load in run flat can not be supported, and a side wall part of the tire is deformed in run flat to a very large extent to bring about an increase in heating of the rubber composition. As a result thereof, there used to be the problem that the tire leads to failure in an earlier stage.

In the case of reducing more an elasticity of rubber used by changing a material blended, a load in run flat can not be supported as well, and a side wall part of the tire is deformed to a very large extent to bring about an increase in heating of the rubber composition. As a result thereof, brought about is the existing situation that the tire leads to failure in an earlier stage.

### DISCLOSURE OF THE INVENTION

Under such circumstances, an object of the present invention is to provide a tire in which a riding comfort of a run flat tire in normal running is maintained and improved and in which a run flat durability as a function of the run flat tire is extraordinarily elevated by scheming a rubber composition used for a bead filler and a side-reinforcing layer.

Investigations repeated by the present inventors in order to achieve the object described above have resulted in finding that a tire in which a rubber composition having specific physical properties which comprises a specific conjugate diene base polymer, a resin and a curing agent for the resin is used for at least one of a bead filler and a side-reinforcing layer maintains and improves a riding quality of a run flat tire in normal running and that it extraordinarily raises a run flat durability which is a function of the run flat tire. The present invention has been completed based on the above knowing.

That is, the present invention provides a tire comprising a pair of left and right bead parts, a bead filler and a carcass layer which are provided at an outside part in a tire radius direction of the above bead part, a tread part provided at an outside part in a tire radius direction of the above carcass layer, a pair of side wall parts provided at left and right sides of the above tread part and a rubber-reinforcing layer provided at the above side wall part, wherein both of a rubber composition constituting the bead filler described above and/or a rubber composition constituting the rubber-reinforcing layer provided at the side wall part in a maximum thickness of 6 to 13 mm contain in a rubber component, 50 % by weight or more of a conjugate diene base polymer which has a vinyl bonding amount of 25 % or more and a weight average molecular weight (Mw) of 200,000 to 900,000 and in which a ratio (Mw/Mn) of a weight average molecular weight (Mw) to a number average molecular weight (Mn) is 1 to 4; and the rubber composition contains a resin and a curing agent therefor in a total amount of 3 mass parts or more per 100 mass parts of the rubber and has an elastic modulus of 5 to 20 MPa in 100 % elongation at 25°C and a dynamic elastic modulus of 10.5 MPa or less at a room temperature.

### BRIEF DESCRIPTION OF THE DRAWING

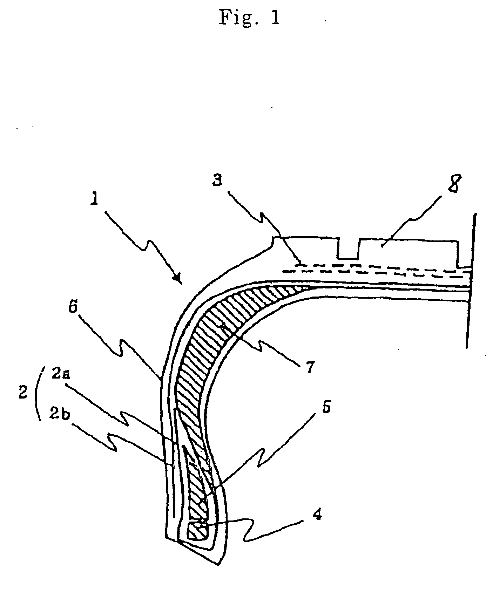

Fig. 1 is a partial cross-sectional drawing showing one example of the tire of the present invention.

### BEST MODE FOR CARRYING OUT THE INVENTION

In the present invention, a tire in which a rubber composition containing 50 % by weight or more of a conjugate diene base polymer in which a vinyl bonding amount in a diene unit of the conjugate diene base polymer, a weight average molecular weight (Mw) and a molecular weight distribution (Mw/Mn) are limited in the specific ranges described above and containing a resin and a curing agent therefor in a total amount of 3 mass parts or more per 100 mass parts of the rubber is used for at least one of a bead filler and a side-reinforcing layer is markedly effective for inhibiting a reduction in a dynamic elastic modulus (E') caused by a rise in a temperature of the above rubber composition and an increase in a loss tangent (tan δ). Accordingly, a side wall part of the tire can be inhibited from increasing in deformation in run flat running, and the run flat durability can be raised.

In the present invention, the vinyl bonding amount in the conjugate diene unit described above has to be 25 % or more based on the diene bonding part of the polymer described above. If the vinyl bonding amount is less than 25 %, a reduction in the dynamic elastic modulus (E') caused by breakage of sulfur cross-linking at a high temperature of 150°Cor higher is dominant, and therefore an effect of inhibiting a reduction in the elastic modulus caused by a rise in the temperature can not be expected to be sufficiently exhibited. Further, an increase in the loss tangent (tan δ) is caused in a certain case. From this point of view, the vinyl bonding amount is preferably 30 % or more, more preferably 35 % or more. It is particularly preferably 40 to 60 %.

A weight average molecular weight (Mw) of the polymer described above has to be 200,000 to 900,000. If the above weight average molecular weight (Mw) is less than 200,000, the rubber composition tends to be inferior in a tensile characteristic and a rolling characteristic, and if it exceeds 900,000, the rubber composition tends to be inferior in a processability. From this point of view, the weight average molecular weight (Mw) is preferably 300,000 to 800,000.

Further, the molecular weight distribution (Mw/Mn) has to be 1 to 4. If it exceeds 4, the heating property tends to be lowered, and it tends to be difficult to maintain the elastic modulus in a temperature area of 150°C or higher.

The conjugate diene base polymer in the present invention is preferably a conjugate diene homopolymer and/or a conjugate diene-aromatic vinyl copolymer, and it includes modified polymers thereof as described later.

In this respect, the conjugate diene monomer includes, for example, 1,3-butadiene, 1,3-pentadiene and 1,3-hexadiene, and among them, 1,3-butadiene is preferred.

An aromatic vinyl monomer used for copolymerization with the conjugate diene monomer includes, for example, styrene, α-methylstyrene, 1-vinylnaphthalene, 3-vinyltoluene, ethylvinylbenzene, divinylbenzene, 4-cyclohexylstyrene and 2,2,6-tolylstyrene, and among them, styrene is preferred.

The conjugate diene base polymer in the present invention is preferably a conjugate diene base polymer having a vinyl bonding amount of 25 % or more in the conjugate diene unit, a weight average molecular weight (Mw) of 200,000 to 900,000 and a molecular weight distribution (Mw/Mn) of 1 to 4 which is represented by a ratio of a weight average molecular weight (Mw) to a number average molecular weight (Mn) and containing a tin atom and/or a nitrogen atom in a molecule. In the present invention, the conjugate diene base polymer is preferably polybutadiene and a styrene-butadiene copolymer, and among them, polybutadiene is preferred.

The rubber composition in the present invention has to contain 50 mass % or more of the conjugate diene base polymer described above in the rubber component. If it is less than 50 mass %, a reduction in the elastic modulus caused by a rise in the temperature can not be inhibited in a certain case, and a reduction in the dynamic elastic modulus caused by a rise in the temperature and an increase in the loss tangent (tan δ) can not be inhibited in a certain case. From this point of view, 60 mass % or more of the polymer described above is preferably contained in the rubber component.

The above composition containing the conjugate diene base polymer described above is notably effective for inhibiting a reduction in the elastic modulus caused by a rise in the temperature and inhibits deformation of the side part caused by run flat running, and therefore the run flat durability can be raised.

In the rubber composition used in the present invention, other rubber components which can be mixed with the conjugate diene base polymer described above shall not specifically be restricted, and they include, for example, natural rubber, polyisoprene synthetic rubber (IR), cis-1,4-polybutadiene rubber (BR), styrene-butadiene rubber (SBR), acrylonitrile-butadiene rubber (NBR), chloroprene rubber (CR) and butyl rubber (IIR). The above rubbers may be used in combination of two or more kinds thereof.

The rubber composition in the present invention has to contain a resin and a curing agent therefor in a total amount of 3 mass parts or more per 100 mass parts of the rubber component described above. If the amount is less than 3 mass parts, the desired tensile elastic modulus is not obtained, and if it is 10 mass parts or more, the rubber is increased in a loss tangent (tan 6) and reduced in a run flat durability in a certain case.

Accordingly, the resin and the curing agent therefor described above are contained preferably in a total amount of 3 mass parts or more and less than 10 mass parts. This makes it possible to allow the rubber composition of the present invention to be improved in a 100 % tensile elastic modulus without sacrificing the other performances, for example, a dynamic elastic modulus.

In this case, an amount ratio of the phenol resin to the curing agent used for the rubber composition described above is 10/90 to 90/10, preferably 90/10 to 50/50.

A thermosetting resin such as a phenol base resin and a melamine resin is used as the resin. Among them, a phenol base resin is particularly preferred.

The phenol base resin described above is oligomers and polymers obtained by condensing phenols with aldehydes. Used as the phenols are phenol, lower alkylphenols such as respective cresols, xylenols and tert-butylphenol, higher alkylphenols such as nonylphenol, cashew oil and lignin and divalent phenols such as resorcin and catechol. Formaldehyde is mainly used for the aldehydes.

The principal phenol resin includes, phenol-formaldehyde resins, resorcin-formaldehyde resins and cresol resins, and the phenol-formaldehyde resins are particularly preferred.

In addition to 100 % phenol resins, natural resin-modified phenol resins and oil-modified phenol resins can be used for the phenol resin.

A novolak type resin which is a two step resin cured with a curing agent is preferably used for the phenol base resin.

The curing agent includes hexamethylenetetramine and hexamethoxymethylmelamine. The combination thereof can freely be selected, and a plurality of the resins and the curing agents may be selected respectively. Also, the resins containing the curing agent may be used.

Further, in order to achieve the object of the present invention by the rubber composition of the present invention, the elastic modulus in 100 % elongation has to be 5 to 20 MPa at 25°C, and the dynamic elastic modulus (E') at a room temperature has to be 10.5 MPa or less.

The elastic modulus in 100 % elongation has preferably a larger value because of necessity to support the load in run flat running. Also, the dynamic elastic modulus (E') at a room temperature has preferably a smaller value from the viewpoint of securing the riding comfort.

As the combination of the resin and the curing agent described above elevates the elastic modulus in 100 % elongation but less elevates the dynamic elastic modulus (E'), less influence is exerted on the riding comfort, and the riding comfort can be controlled by varying an amount of a filler such as carbon black.

The rubber composition containing the conjugate diene base polymer described above in the present invention can suitably contain, in addition to the respective components described above, various compounding agents including a vulcanizing agent such as sulfur and peroxides, a vulcanization-accelerator, an antioxidant, a softening agent, a reinforcing filler, an inorganic filler, a phenol resin an a curing agent. Further, the rubber composition of the present invention may be a combined matter with particles, fibers and cloths of various materials.

The tire of the present invention can be produced by applying the rubber composition described above to at least one of the bead filler and the side-reinforcing layer provided at the side wall part by a conventional method.

Air which is usual or changed in an oxygen partial pressure or inert gas such as nitrogen can be used as gas charged into the tire.

Next, the tire of the present invention shall be explained according to the drawing attached.

Fig. 1 is a cross-sectional drawing of a left half part in one example of the tire of the present invention, and the above tire 1 comprises a pair of left and right ring-like bead cores 4, a bead filler 5 provided at an outside part in a tire radius direction of the above bead core 4, a carcass layer 2 comprising at least one ply in which plural paralleled cords are buried in a coating rubber, a belt layer 3 provided at an outside part in a tire radius direction of the above carcass layer 2, a tread part 8 provided in a tire radius direction of the above belt layer 3, a pair of side wall parts 6 provided at left and right sides of the above tread part 8 and a rubber-reinforcing layer 7 provided at the above side wall part 6.

The carcass layer 2 has a folded carcass ply 2a and a down carcass ply 2b, and both ends of the folded carcass ply 2a are folded around the bead core 4 to form a folded end part. The bead filler 5 is situated between the folded carcass ply 2a and the folded end part thereof, and the down carcass ply 2b is situated between the side wall part 6 and the folded end part of the folded carcass ply 2a.

The rubber-reinforcing layer 7 is provided on an inside peripheral direction face in the side wall part 6 of the folded carcass ply 2a. The rubber-reinforcing layer 7 reinforcing the side wall part 6 is provided in a maximum rubber thickness of 6 to 13 mm. The rubber of the rubber-reinforcing layer 7 may be a combined matter with organic fibers and inorganic particles, and the cross-sectional form thereof shall not specifically be restricted as long as it has a function of reinforcing the side.

In the tire of the present invention, at least one of the bead filler 5 and the rubber-reinforcing layer 7 each described above is formed using the rubber composition described above to thereby make it possible to maintain and improve a riding comfort of a run flat tire in normal running and extraordinarily elevate a run flat durability which is a function of the run flat tire.

Next, the present invention shall be explained in further details with reference to examples, but the present invention shall by no means be restricted by these examples.

Various measured values were determined according to methods described below.

Physical properties of conjugate diene base polymer high vinyl polybutadiene rubber:
(1) Microstructure of the polymer
   A vinyl bond (1,2-bond) in the conjugate diene unit was determined by an infrared method (Morello method).
(2) Weight average molecular weight (Mw) of the polymer
   The weight average molecular weight (Mw) of the polymer was measured by gel permeation chromatography [GPC: HLC-8020 manufactured by Toso Co., Ltd., column: GMX-XL (2 column series) manufactured by Toso Co., Ltd.], and it was determined using a differential refractive index (RI) in terms of polystyrene using monodispersed polystyrene as a standard.

### Performances of vulcanized rubber:

(1) Dynamic storage elastic modulus (E')
   A sheet having a width of 5 mm and a length of 40 mm was cut out from a slab sheet having a thickness of 2 mm which was obtained by vulcanizing the rubber composition on the conditions of 160°C and 12 minutes to prepare a sample. A dynamic storage elastic modulus of the above sample was measured by means of a spectrometer manufactured by Ueshima MFG Co., Ltd. on the measuring conditions of a distance of 10 mm between chucks, an initial distortion of 200 micrometer (micron), a dynamic distortion of 1 %, a frequency of 52 Hz, a measurement-commencing temperature of 25°C, a temperature-elevating speed of 3°C/minute and a measurement-finishing temperature of 250°C.
(2) Tensile elastic modulus
   The tensile elastic modulus was measured according to JIS K6251.

### Test of experimental tire:

(1) Run flat durability
   The respective experimental tires were rim-assembled at an atmospheric pressure and charged with air at an internal pressure of 230 kPa, and then a core of a valve was pulled out after left standing for 24 hours in a room of 38°C to turn an internal pressure to an atmospheric pressure. A drum running test was carried out on the conditions of a load of 4.17 kN (425 kg), a speed of 89 km/h and a room temperature of 38°C. A distance running until a trouble was caused was defined as a run flat durability and shown by an index in the examples, wherein a value of Comparative Example 1 was set to 100. The larger the index, the better the run flat durability.
(2) Riding comfort
   An experimental tire was installed in a passenger car to carry out a feeling test of a riding comfort by two professional drivers, and it was evaluated by a score of 1 to 10 to determine an average value thereof. The larger the value, the better the riding comfort.

### Production Example (conjugate diene base polymer)

A 15 mass % cyclohexane solution of dried butadiene was continuously introduced into a pressure proof reaction apparatus of 8 liter equipped with a temperature-controlling jacket which was substituted with nitrogen at a speed of 200 g/minute. Further, 15 mmol/minute of a 1 mol/liter cyclohexane solution of ditetrahydrofurylpropane (DTHFP) and 0.2 mmol/minute of a n-hexane solution of n-butyllithium were continuously introduced thereinto from the same port. The polymerization system was always maintained at 80°C, and the resulting polymer was continuously taken out from an upper part of the reactor. It was thrown into 1 mass % isopropanol of 2,6-di-t-butyl-p-cresol (BHT) to obtain a polymer. No precipitation was observed in the polymer since commencing of the polymerization through the completion thereof, and it was evenly transparent.

The polymerization conversion rate was almost 100 %. Further, the solid matter was dried to obtain a rubberlike polymer. This polybutadiene was measured for a vinyl bonding amount, a weight average molecular weight (Mw) and a molecular weight distribution. It had a vinyl bonding amount of 50 %, a weight average molecular weight (Mw) of 300,000 and a molecular weight distribution (Mw/Mn) of 2.1.

### Examples 1 to 3 and Comparative Examples 1 to 4

A rubber component 100 parts by weight having a kind and an amount each shown in Table 1 was blended with carbon black, a resin and a curing agent, a process oil, zinc oxide, stearic acid, an antioxidant 6C, a vulcanization-accelerator NS and sulfur to prepare a rubber composition.

The rubber composition described above was used for a side wall part-reinforcing layer and a bead filler to produce a radial tire for a passenger car having a size of 215/45ZR17 by a conventional method. The tire was evaluated for a riding comfort and a run flat durability. A maximum thickness of the side wall part-reinforcing layer was described in Table 1 as a reinforcing rubber gauge. The results thereof are shown in Table 1.

**Table 1**

| | | | | | | | |
|---|---|---|---|---|---|---|---|
| | Example | | | Comparative Example | | | |
| | 1 | 2 | 3 | 1 | 2 | 3 | 4 |
| Natural rubber | 30 | 30 | 30 | 30 | 30 | 30 | 30 |
| BR^{*1} | | | | 70 | | 70 | 70 |
| High Vinyl BR^{*2} | 70 | 70 | 70 | | 70 | | |
| Carbon black^{*3} | 30 | 40 | 50 | 40 | 40 | 40 | 30 |
| Phenol resin^{*4} | 3 | 3 | 3 | | | 3 | 3 |
| Curing agent (hexamethylenetetramine)^{*5} | 1 | 1 | 1 | | | 1 | 1 |
| Curing agent (hexamethoxy-methylmelamine)^{*6} | 2 | 2 | 2 | | | 2 | 2 |
| Elastic modulus in 100 % elongation (MPa) | 6.2 | 7.3 | 9.6 | 5.3 | 4.8 | 7.3 | 6.1 |
| Room temperature 1 % distortion dynamic elastic modulus (MPa) | 6.5 | 8.5 | 10.4 | 15.5 | 7.2 | 16.8 | 14.5 |
| Run flat durability | 105 | 120 | 150 | 100 | 70 | 120 | 105 |
| Riding comfort | 7.0 | 6.5 | 5.5 | 5.0 | 7.0 | 4.5 | 5.0 |
| Reinforcing rubber gauge (mm) | 8.0 | 8.0 | 8.0 | 8.0 | 8.0 | 8.0 | 8.0 |

| | | | | | | | |
|---|---|---|---|---|---|---|---|
| Remarks *1: Polybutadiene rubber: ┌BR01┘ (cis-1,4-polybutadiene, vinyl bonding amount 2.5 %, manufactured by JSR Co., Ltd.) *2: Conjugate diene base polymer: (high vinyl polybutadiene: vinyl bonding amount 50 %, weight average molecular weight (Mw) 500,000, molecular weight distribution (Mw/Mn) 2.1) *3: Carbon black: GPF (brand name: Asahi #55, manufactured by Asahi Carbon Co., Ltd.) *4: Phenol resin: phenol·formaldehyde resin (novolak type, manufactured by Sumitomo Bakelite Co., Ltd.) *5: Hexamethylenetetramine: manufactured by Ohuchishinko Chemical Industrial Co., Ltd. *6: Hexamethoxymethylmelamine: manufactured by Mitsui Cytec Co., Ltd. | | | | | | | |

As shown in Table 1, it can be found from comparison of, for example, Example 2 with Comparative Example 2 that the tire of the present invention in which a rubber composition having specific physical property values blended with a conjugate diene base polymer having specific properties in the present invention and comprising a resin such as a phenol resin and a curing agent is used for a side wall part-reinforcing rubber for a tire and/or a bead filler rubber for a tire maintains and improves a riding comfort of a run flat tire in normal running and extraordinarily elevates a run flat durability which is a function of the run flat tire.

### INDUSTRIAL APPLICABILITY

According to the present invention, applying of a rubber composition having specific physical property values blended with a conjugate diene base polymer having specific properties and comprising a resin such as a phenol resin and a curing agent therefor to a rubber-reinforcing layer in a side wall part of a tire and/or a bead filler rubber makes it possible to provide a tire in which a riding comfort of a run flat tire in normal running is maintained and improved and in which a run flat durability as a function of the run flat tire is extraordinarily elevated.

## Claims

1. A tire (1) comprising a pair of left and right bead parts, a bead filler (5) and a carcass layer (2) which are provided at an outside part in a tire radial direction of the above bead part, a tread part (8) provided at an outside part in a tire radial direction of the above carcass layer, a pair of sidewall parts (6) provided at left and right sides of the above tread part and a rubber-reinforcing layer (7) provided at the above sidewall part, wherein a rubber composition constituting the bead filler (5) described above contains in a rubber component, 50 mass % or more of a conjugate diene base polymer which has a vinyl bonding amount of 25 % or more and a weight average molecular weight (Mw) of 200,000 to 900,000 and in which a molecular weight distribution (Mw/Mn) shown by a ratio of a weight average molecular weight (Mw) to a number average molecular weight (Mn) is 1 to 4; **characterized in that** the rubber composition contains a resin and a curing agent therefor in a total amount of 3 mass parts or more per 100 mass parts of the rubber (phr) and has an elastic modulus of 5 to 20 MPa in 100 % elongation at 25°C and a dynamic elastic modulus of 10.5 MPa or less at a room temperature.

2. A tire (1) comprising a pair of left and right bead parts, a bead filler (5) and a carcass layer (2) which are provided at an outside part in a tire radial direction of the above bead part, a tread part (8) provided at an outside part in a tire radial direction of the above carcass layer, a pair of sidewall parts (6) provided at left and right sides of the above tread part and a rubber-reinforcing layer (7) provided at the above sidewall part, wherein a rubber composition constituting the rubber-reinforcing layer provided at the sidewall part described above in a maximum thickness of 6 to 13 mm contains in a rubber component, 50 mass % or more of a conjugate diene base polymer which has a vinyl bonding amount of 25 % or more and a weight average molecular weight (Mw) of 200,000 to 900,000 and in which a molecular weight distribution (Mw/Mn) shown by a ratio of a weight average molecular weight (Mw) to a number average molecular weight (Mn) is 1 to 4; **characterized in that** the rubber composition contains a resin and a curing agent therefor in a total amount of 3 mass parts or more per 100 mass parts of the rubber (phr) and has an elastic modulus of 5 to 20 MPa in 100 % elongation at 25°C and a dynamic elastic modulus of 10.5 MPa or less at a room temperature.

3. A tire (1) comprising a pair of left and right bead parts, a bead filler (5) and a carcass layer (2) which are provided at an outside part in a tire radial direction of the above bead part, a tread part (8) provided at an outside part in a tire radial direction of the above carcass layer, a pair of sidewall parts (6) provided at left and right sides of the above tread part and a rubber-reinforcing layer (7) provided at the above sidewall part, wherein both of a rubber composition constituting the bead filler (5) described above and a rubber composition constituting the rubber-reinforcing layer (7) provided at the sidewall part described above in a maximum thickness of 6 to 13 mm contain in a rubber component, 50 mass % or more of a conjugate diene base polymer which has a vinyl bonding amount of 25 % or more and a weight average molecular weight (Mw) of 200,000 to 900,000 and in which a molecular weight distribution (Mw/Mn) shown by a ratio of a weight average molecular weight (Mw) to a number average molecular weight (Mn) is 1 to 4; **characterized in that** the rubber composition contains a resin and a curing agent therefor in a total amount of 3 mass parts or more per 100 mass parts of the rubber (phr) and has an elastic modulus of 5 to 20 MPa in 100 % elongation at 25°C and a dynamic elastic modulus of 10.5 MPa or less at a room temperature.

4. The tire as described in claim 1, 2 or 3, wherein the resin described above is a phenol base resin.

## Patentansprüche

1. Reifen (1), der aufweist: ein Paar von linkem und rechtem Wulstteil; einen Kernreiter (5); und eine Karkassenlage (2), die an einem Außenteil in einer radialen Reifenrichtung des vorangehend erwähnten Wulstteils vorhanden ist; ein Laufflächenteil (8), das an einem Außenteil in einer radialen Reifenrichtung der vorangehend erwähnten Karkassenlage vorhanden ist; ein Paar Seitenwandteile (6), die auf der linken und rechten Seite des vorangehend erwähnten Laufflächenteils vorhanden sind; und eine Gummiverstärkungslage (7), die am vorangehend erwähnten Seitenwandteil vorhanden ist, wobei eine Gummizusammensetzung, die den vorangehend beschriebenen Kernreiter (5) bildet, in einer Gummikomponente 50 Masse-% oder mehr eines Polymers auf der Basis von konjuigiertem Dien enthält, das eine Vinylbindungsmenge von 25 % oder mehr und ein Gewichtsmittel des Molekulargewichtes (Mw) von 200000 bis 900000 aufweist, und bei dem eine Molekulargewichtsverteilung (Mw/Mn), die durch ein Verhältnis des Gewichtsmittels des Molekulargewichtes (Mw) zum Zahlenmittel des Molekulargewichtes (Mn) gezeigt wird, 1 bis 4 beträgt; **dadurch gekennzeichnet, dass** die Gummizusammensetzung ein Harz und ein Vulkanisationsmittel dafür in einer Gesamtmenge von 3 Masse-T. oder mehr pro 100 Masse-T. des Gummis (Teile pro hundert Harz) enthält und einen Elastizitätsmodul von 5 bis 20 MPa bei 100 % Dehnung bei 25 °C und einen dynamischen Elastizitätsmodul von 10,5 MPa oder weniger bei einer Raumtemperatur aufweist.

2. Reifen (1), der aufweist: ein Paar von linkem und rechtem Wulstteil; einen Kernreiter (5); und eine Karkassenlage (2), die an einem Außenteil in einer radialen Reifenrichtung des vorangehend erwähnten Wulstteils vorhanden ist; ein Laufflächenteil (8), das an einem Außenteil in einer radialen Reifenrichtung der vorangehend erwähnten Karkassenlage vorhanden ist; ein Paar Seitenwandteile (6), die auf der linken und rechten Seite des vorangehend erwähnten Laufflächenteils vorhanden sind; und eine Gummiverstärkungslage (7), die am vorangehend erwähnten Seitenwandteil vorhanden ist, wobei eine Gummizusammensetzung, die die Gummiverstärkungslage bildet, die am vorangehend beschriebenen Seitenwandteil mit einer maximalen Dicke von 6 bis 13 mm vorhanden ist, in einer Gummikomponente 50 Masse-% oder mehr eines Polymers auf der Basis von konjugiertem Dien enthält, das eine Vinylbindungsmenge von 25 % oder mehr und ein Gewichtsmittel des Molekulargewichtes (Mw) von 200000 bis 900000 aufweist, und wobei eine Molekulargewichtsverteilung (Mw/Mn), die durch ein Verhältnis des Gewichtsmittels des Molekulargewichtes (Mw) zum Zahlenmittel des Molekulargewichtes (Mn) gezeigt wird, 1 bis 4 beträgt; **dadurch gekennzeichnet, dass** die Gummizusammensetzung ein Harz und ein Vulkanisationsmittel dafür in einer Gesamtmenge von 3 Masse-T. oder mehr pro 100 Masse-T. des Gummis (Teile pro hundert Harz) enthält und einen Elastizitätsmodul von 5 bis 20 MPa bei 100 % Dehnung bei 25 °C und einen dynamischen Elastizitätsmodul von 10,5 MPa oder weniger bei einer Raumtemperatur aufweist.

3. Reifen (1), der aufweist: ein Paar von linkem und rechtem Wulstteil; einen Kernreiter (5); und eine Karkassenlage (2), die an einem Außenteil in einer radialen Reifenrichtung des vorangehend erwähnten Wulstteils vorhanden ist; ein Laufflächenteil (8), das an einem Außenteil in einer radialen Reifenrichtung der vorangehend erwähnten Karkassenlage vorhanden ist; ein Paar Seitenwandteile (6), die auf der linken und rechten Seite des vorangehend erwähnten Laufflächenteils vorhanden sind; und eine Gummiverstärkungslage (7), die am vorangehend erwähnten Seitenwandteil vorhanden ist, wobei sowohl eine Gummizusammensetzung, die den vorangehend beschriebenen Kernreiter (5) bildet, als auch eine Gummizusammensetzung, die die Gummiverstärkungslage (7) bildet, die am vorangehend beschriebenen Seitenwandteil mit einer maximalen Dicke von 6 bis 13 mm vorhanden ist, in einer Gummikomponente 50 Masse-% oder mehr eines Polymers auf der Basis von konjugiertem Dien enthält, das eine Vinylbindungsmenge von 25 % oder mehr und ein Gewichtsmittel des Molekulargewichtes (Mw) von 200000 bis 900000 aufweist, und wobei eine Molekulargewichtsverteilung (Mw/Mn), die durch ein Verhältnis des Gewichtsmittels des Molekulargewichtes (Mw) zum Zahlenmittel des Molekulargewichtes (Mn) gezeigt wird, 1 bis 4 beträgt; **dadurch gekennzeichnet, dass** die Gummizusammensetzung ein Harz und ein Vulkanisationsmittel dafür in einer Gesamtmenge von 3 Masse-T. oder mehr pro 100 Masse-T. des Gummis (Teile pro hundert Harz) enthält und einen Elastizitätsmodul von 5 bis 20 MPa bei 100 % Dehnung bei 25 °C und einen dynamischen Elastizitätsmodul von 10,5 MPa oder weniger bei einer Raumtemperatur aufweist.

4. Reifen nach Anspruch 1, 2 oder 3, bei dem das vorangehend beschriebene Harz ein Harz auf Phenolbasis ist.

## Revendications

1. Bandage pneumatique (1), comprenant une paire de parties de talon de gauche et de droite, un bourrage sur tringle (5) et une nappe de carcasse (2), agencés au niveau d'une partie externe dans une direction radiale du bandage pneumatique par rapport à la partie de talon ci-dessus, une partie de bande de roulement (8) agencée au niveau d'une partie externe dans une direction radiale de la nappe de carcasse ci-dessus, une paire de parties de flanc (6) agencées au niveau des côtés de gauche et de droite de la partie de bande de roulement ci-dessus, et une couche de gomme de renforcement (7) agencée au niveau de la partie de flanc ci-dessus, une composition de caoutchouc constituant le bourrage sur tringle (5) décrit ci-dessus contenant, dans un composant de caoutchouc, 50% en poids ou plus d'un polymère à base de diène conjugué, présentant une valeur de liaison de vinyle de 25% ou plus et une masse moléculaire en poids moyenne (Mw) comprise entre 200000 et 900000, une distribution du poids moléculaire (Mw/Mn) représentée par un rapport entre une masse moléculaire moyenne en poids (Mw) et une masse moléculaire moyenne en nombre (Mn) étant de 1 à 4 ; **caractérisé en ce que** la composition de caoutchouc contient une résine et un agent de durcissement de celle-ci, dans une quantité totale représentant 3 parties en poids ou plus pour 100 parties en poids du caoutchouc (phr), et présente un module d'élasticité compris entre 5 et 20 MPa à un allongement à 100% et à 25°C et un module d'élasticité dynamique de 10,5 MPa ou moins à température ambiante.

2. Bandage pneumatique (1), comprenant une paire de parties de talon de gauche et de droite, un bourrage sur tringle (5) et une nappe de carcasse (2), agencés au niveau d'une partie externe dans une direction radiale du bandage pneumatique par rapport à la partie de talon ci-dessus, une partie de bande de roulement (8) agencée au niveau d'une partie externe dans une direction radiale du pneumatique par rapport à la nappe de carcasse ci-dessus, une paire de parties de flanc (6) agencées au niveau des côtés de gauche et de droite de la partie de bande de roulement ci-dessus, et une couche de gomme de renforcement (7) agencée au niveau de la partie de flanc ci-dessus, dans lequel une composition de caoutchouc constituant la couche de gomme de renforcement agencée au niveau de la partie de flanc décrite ci-dessus, ayant une épaisseur maximale comprise entre 6 et 13 mm, contient, dans un composant de caoutchouc, 50 % en poids ou plus d'un polymère à base de diène conjugué, présentant une valeur de liaison de vinyle de 25% ou plus et une masse moléculaire moyenne en poids (Mw) comprise entre 200000 et 900000, une distribution du poids moléculaire (Mw/Mn), représentée par un rapport entre une masse moléculaire moyenne en poids (Mn) et une masse moléculaire moyenne en nombre (Mn) étant de 1 à 4 ; **caractérisé en ce que** la composition de caoutchouc contient une résine et un agent de durcissement de celle-ci, dans une quantité totale de 3 parties en poids ou plus pour 100 parties en poids du caoutchouc (phr), et présente un module d'élasticité compris entre 5 à 20 MPa à un allongement de 100% et à 25°C et un module d'élasticité dynamique de 10,5 MPa ou moins à température ambiante.

3. Bandage pneumatique (1) comprenant une paire de parties de talon de gauche et de droite, un bourrage sur tringle (5) et une nappe de carcasse (2), agencés au niveau d'une partie externe dans une direction radiale du bandage pneumatique par rapport à la partie de talon ci-dessus, une partie de bande de roulement (8) agencée au niveau d'une partie externe dans une direction radiale du pneumatique par rapport à la nappe de carcasse ci-dessus, une paire de parties de flanc (6) agencées au niveau des côtés de gauche et de droite de la partie de bande de roulement ci-dessus, et une couche de gomme de renforcement (7) agencée au niveau de la partie de flanc ci-dessus, dans lequel une composition de caoutchouc constituant le bourrage sur tringle (5) décrit ci-dessus, et une composition de caoutchouc constituant la couche de gomme de renforcement (7) agencée au niveau de la partie de flanc décrite ci-dessus, ayant une épaisseur maximale comprise entre 6 à 13 mm, contiennent, dans un composant de caoutchouc, 50% en poids ou plus d'un polymère à base de diène conjugué, présentant une valeur de liaison de vinyle de 25% ou plus et une masse moléculaire moyenne en poids (Mw) comprise entre 200000 et 900000, une distribution du poids moléculaire (Mw/Mn) représentée par un rapport entre une masse moléculaire moyenne en poids (Mw) et une masse moléculaire moyenne en nombre (Mn) étant de 1 à 4 ; **caractérisé en ce que** la composition de caoutchouc contient une résine et un agent de durcissement pour celle-ci, avec une quantité totale de 3 parties en poids ou plus pour 100 parties en poids du caoutchouc (phr), et présente un module d'élasticité compris entre 5 et 20 MPa à un allongement de 100% et à 25°C, et un module d'élasticité dynamique de 10,5 MPa ou moins à température ambiante.

4. Bandage pneumatique selon les revendications 1, 2 ou 3, dans lequel la résine décrite ci-dessus est une résine à base de phénol.
